# EUROPÄISCHE PATENTSCHRIFT

(11) **EP 3 055 435 B1**
(45) Veröffentlichungstag und Bekanntmachung des Hinweises auf die Patenterteilung: **15.11.2017**
(21) Anmeldenummer: 14766951.9
(22) Anmeldetag: 10.09.2014
(51) Int. Cl.: C21C 5/46, C21C 5/52, F27B 3/22, F27D 3/16, F27D 3/18, F27D 99/00, F27B 3/08

(54) **INJEKTORVORRICHTUNG ZUM AUFBLASEN ODER EINBLASEN VON SAUERSTOFFREICHEN GASEN IN EINEM METALLURGISCHEN AGGREGAT ODER SCHMELZGEFÄSS UND ELEKTROLICHTBOGENOFEN**
INJECTOR DEVICE FOR BLOWING OXYGEN-RICH GASES ON OR IN, IN A METALLURGICAL UNIT OR MELTING VESSEL, AND ELECTRIC ARC FURNACE
DISPOSITIF D'INJECTION PERMETTANT DE SOUFFLER OU D'INSUFFLER DES GAZ RICHES EN OXYGÈNE DANS UNE UNITÉ OU UN CREUSET DE FUSION MÉTALLURGIQUE ET FOUR À ARC ÉLECTRIQUE

(30) Priorität: 08.10.2013 DE 102013220228
(43) Veröffentlichungstag der Anmeldung: 17.08.2016
(73) Patentinhaber: SMS group GmbH, 40237 Düsseldorf (DE)
(72) Erfinder: BUESS, Stefan, 42349 Wuppertal (DE)
(74) Vertreter: Klüppel, Walter
(86) Internationale Anmeldenummer: PCT/EP2014/069306
(87) Internationale Veröffentlichungsnummer: WO 2015/051966

(56) Entgegenhaltungen:
- AU-B3- 538 402
- US-A- 4 653 730

## Beschreibung

Die Erfindung betrifft eine Injektorvorrichtung zur pyrometallurgischen Behandlung von Metallen, Metallschmelzen und/oder Schlacken in einem metallurgischen Aggregat oder Schmelzgefäß, insbesondere einem Lichtbogenofen, mit einer Injektoreinrichtung zum Erzeugen eines Hochgeschwindigkeitsgasstrahls aus einem Sauerstoffgasstrahl und einem entzündeten Brenngas-Luft-Gemischstrahl, bei welcher die Injektoreinrichtung ein in einem Düsenkopfteil angeordnetes Lavaldüsenelement zum Erzeugen des Sauerstoffgasstrahls umfasst, und bei welcher das Brenngas-Luft-Gemisch mittels eines Mischerelements zum Mischen von Brenngas und Luft mischbar ist.

Die Erfindung betrifft darüber hinaus einen Elektrolichtbogenofen.

Gattungsgemäße Injektorvorrichtungen und Elektrolichtbogenöfen sind aus dem Stand der Technik gut bekannt.

Beispielweise ist in der internationalen Anmeldung WO 2012/089754 A2 ein Verfahren zur pyrometallurgischen Behandlung von Metallen, Metallschmelzen und/oder Schlacken in einem metallurgischen Aggregat oder Schmelzgefäß und eine entsprechende Injektorvorrichtung zum Durchführen des Verfahrens beschrieben. Die Injektorvorrichtung zeichnet sich insbesondere durch einen Sauerstoff-Injektor aus, an welchem schräg zu seiner Mittelachse ein Heißgasstutzen mit einer Zündeinrichtung angeflanscht ist. Die Zündeinrichtung sitzt mit einem Mischer zum Mischen von Erdgas und Luft an einem dem Sauerstoff-Injektor abgewandten Ende des Heißgasstutzens. Der Mischer trägt dabei auch die Zündkerzen zum Zünden des Erdgas-Luft-Gemischs. Das entzündete Erdgas-Luft-Gemisch wird mittels des Heißgasstutzens seitlich in den Sauerstoff-Injektor eingeleitet, wobei das entzündete Erdgas-Luft-Gemisch durch den aus einer Lavaldüse des Sauerstoff-Injektors ausströmenden Sauerstoffgasstrahls beschleunigt wird. Zwar kann das Verfahren zur pyrometallurgischen Behandlung mit dieser Injektorvorrichtung gut durchgeführt werden, jedoch baut diese Injektorvorrichtung derart groß und aufwendig, dass sie in der Herstellung und Wartung Nachteile mit sich bringt. In der Regel sind die einzelnen Bauteile zudem noch miteinander verschweißt. Mit anderen Worten, bekannte Injektorvorrichtungen sind massiv und damit auch kostenintensiv herzustellen.

Der Erfindung liegt die Aufgabe zugrunde, gattungsgemäße Injektorvorrichtungen weiterzuentwickeln, so dass zumindest die vorstehend genannten Nachteile überwunden werden können.

Die Aufgabe der Erfindung wird gelöst von einer Injektorvorrichtung zur pyrometallurgischen Behandlung von Metallen, Metallschmelzen und/oder Schlacken in einem metallurgischen Aggregat oder Schmelzgefäß mit einer Injektoreinrichtung zum Erzeugen eines Hochgeschwindigkeitsgasstrahls aus einem Sauerstoffgasstrahl und einem entzündeten Brenngas-Luft-Gemischstrahl, bei welcher die Injektoreinrichtung ein in einem Düsenkopfteil angeordnetes Lavaldüsenelement zum Erzeugen des Sauerstoffgasstrahls umfasst, und bei welcher das Brenngas-Luft-Gemisch mittels eines Mischerelements zum Mischen von Brenngas und Luft mischbar ist, wobei erfindungsgemäß das Lavaldüsenelement und das Mischerelement gemeinsam entlang der Mittellängsachse der Injektoreinrichtung voneinander lösbar hintereinander angeordnet sind.

Erfindungsgemäß liegen das Lavaldüsenelement und das Mischerelement voneinander lösbar und hintereinander auf der Mittellängsachse der Injektoreinrichtung der in dem metallurgischen Aggregat oder Schmelzgefäß angeordneten Injektorvorrichtung, wodurch insbesondere das Lavaldüsenelement schnell austauschbar ist. Dies ist vorteilhaft, da das Lavaldüsenelement ein Ferner ist aus der US 4,653,730 eine pyrometallische Mehrzweck-Prozessvorrichtung für einen metallurgischen Ofen bekannt, welche eine in den metallurgischen Ofen einbringbare Lanze und eine daran angeordnete Düse umfasst. Jedoch ist mit der Düse nur eine eingeschränkte Anzahl an unterschiedlichen Betriebsmodi hinsichtlich der Mehrzweck-Prozessvorrichtung möglich, wobei die Düse, insbesondere mit ihren Wasserkühlkanälen, auch kompliziert gebaut ist.

Darüber hinaus ist aus der AU 538 402 B3 eine Vorrichtung zum Einblasen von feinen Feststoffpartikeln, wie zuvorderst Kohlenstaub, unter Zuhilfenahme von Brenngas bekannt. Hierdurch wird der Kohlenstaub durch ein Zentralrohr befördert, durch welches hindurch auch Luft beigemischt werden kann. Jedoch sind auch hier die Betriebsmodi der Vorrichtung stark eingeschränkt, da das Brenngas nur in das Zentralrohr eingeleitet werden kann.

Der Erfindung liegt die Aufgabe zugrunde, gattungsgemäße Injektorvorrichtungen weiterzuentwickeln, so dass zumindest die vorstehend genannten Nachteile überwunden werden können.

Die Aufgabe der Erfindung wird gelöst von einer Injektorvorrichtung zur pyrometallurgischen Behandlung von Metallen, Metallschmelzen und/oder Schlacken in einem metallurgischen Aggregat oder Schmelzgefäß mit einer Injektoreinrichtung zum Erzeugen eines Hochgeschwindigkeitsgasstrahls aus einem Sauerstoffgasstrahl und einem entzündeten Brenngas-Luft-Gemischstrahl, bei welcher die injektoreinrichtung ein in einem Düsenkopfteil angeordnetes Lavaldüsenelement zum Erzeugen des Sauerstoffgasstrahls umfasst, und bei welcher das Brenngas-Luft-Gemisch mittels eines Mischerelements zum Mischen von Brenngas und Luft mischbar ist, wobei erfindungsgemäß das Lavaldüsenelement und das Mischerelement innerhalb und/oder an dem Düsenkopfteil gemeinsam entlang der Mittellängsachse der Injektoreinrichtung voneinander lösbar hintereinander derart angeordnet sind, dass , dass zwischen dem Düsenkopfteil und dem Lavaldüsenelement ein Ringspalt entsteht, in welchen ein Brenngaskanal und ein Luftkanal des Mischerelements münden.

Einerseits kann hierdurch auf einen separat an die Injektoreinrichtung seitlich angeflanschten Heißgasstutzen verzichtet werden.

Andererseits liegen das Lavaldüsenelement und das Mischerelement voneinander lösbar und hintereinander auf der Mittellängsachse der Injektoreinrichtung der in dem metallurgischen Aggregat oder Schmelzgefäß angeordneten Injektorvorrichtung, wodurch insbesondere das Lavaldüsenelement schnell austauschbar ist. Dies ist vorteilhaft, da das Lavaldüsenelement ein Verschleißteil ist. Darüber hinaus kann die Injektoreinrichtung problemlos an unterschiedliche Prozesse angepasst werden, wie nachstehend noch erläutert wird.

Zumal baut die vorliegende Injektoreinrichtung außergewöhnlich kompakt und klein, wodurch insgesamt signifikante Einsparungen hinsichtlich des verbauten Materials erzielt werden könnere.

Bisher waren das Lavaldüsenelement entlang einer Längsachse eines Sauerstoffinjektors und das Mischerelement entlang einer anderen Längsachse einer Zündeinrichtung angeordnet, wobei diese beiden Längsachsen in einem Winkel zueinander angeordnet sind, wodurch die eingangs zitierte, aus dem Stand der Technik bekannte Injektorvorrichtung insgesamt sehr groß baut. Insbesondere die das Mischerelement umfassende Zündeinrichtung ist dort mittels eines Helßgasstutzens seitlich an dem Gehäuse der Injektoreinrichtung angeflanscht, wodurch die Injektorvorrichtung nachteilig ein relativ großes Einbaumaß aufweist.

Vortellhafterwelse sind das Lavaldüsenelement und das Mischerelement vorliegend nicht mehr durch mindestens den Heißgasstutzen voneinander beabstandet, wodurch eine Injektorvorrichtung bisher insgesamt sehr groß baut, sondern das Lavaldüsenelement und das Mischerelement liegen unmittelbar hintereinander und sind hierbei direkt miteinander verbunden.

Die vorliegende Injektoreinrichtung kann noch vorteilhafter bereitgestellt werden, wenn das Lavaldüsenelement und das Mischerelement durch Zerspannung gefertigte Drehbauteile sind, welche kraft- und/oder formschlüssig unmittelbar miteinander verbunden sind. Durch die als Drehbautelle ausgeführte Lavaldüsenelement und Mischerelement kann eine schnell zu montierende und demontierende Injektoreinrichtung realisiert werden.

Zweckmäßigerweise ist ein erster Zufuhrkanal des Mischerelements derart in dem in dem Mischerelement angeordnet, dass dieser In Bezug auf die Mittellängsachse axial in den Ringspalt hinein mündet. Ein zweiter Zufuhrkanal des Mischerelements ist vorzugsweise hingegen derart in dem Mischerelement angeordnet, dass dieser in Bezug auf die Mittellängsachse radial in den Ringspalt hinein mündet. Hierdurch können die Zufuhrkanäle zum Zuführen eines Brenngases und Luft innerhalb eines Mlscherelementgrundkörpers vorteilhaft zueinander geführt werden, wodurch das Mischerelement sehr kompakt und klein gebaut werden kann.

Um das Mischerelement im Sinne der Erfindung konstruktiv einfach an dem Düsenkopfteil festlegen zu können, ist es vorteilhaft, wenn das Mischerelement an seinem dem Lavaldüsenelement abgewandten Ende einen kragenartigen Flansch aufweist, mittels welchem das Mischerelement an dem Düsenkopfteil befestigt werden kann.

Besonders zweckmäßig Ist es, wenn der Ringspalt in Abhängigkeit von einem axialen Abstand zwischen dem Lavaldüsenelement und dem Mischerelement einstellbar Ist. Insbesondere wenn der Querschnitt des Ringspalts zumindest bereichsweise in Abhängigkeit von dem Axialabstand Lavaldüsenelement/Mischerelement beeinflusst werden kann, kann die Injektorvorrichtung für unterschiedliche Prozesse eines metallurgischen Aggregats oder eines Schmelzgefäßes zusätzlich einfach eingestellt werden.

Konstruktiv einfach kann dieser Axialabstand verändert werden, wenn der axiale Abstand zwischen dem Lavaldüsenelement und dem Mischerelement mittels unterschiedlicher Distanzringscheiben einstellbar ist. Beispielsweise können diese Distanzringscheiben auf einem Absatz des Lavaldüsenelements aufgeschoben werden und sich gegen eine Schulter des Lavaldüsenelements abstützen. Hierdurch kann das Mischerelement dann nur noch mit einem durch die Dicke der aufgeschoben Distanzringscheibe verringerten Montageweg an dem Lavaldüsenelement angeordnet bzw. befestigt werden. Gegebenenfalls können auch mehrere Distanzringscheiben vorgesehen werden.

Darüber hinaus kann durch die einfache Konstruktion der Injektoreinrichtung insbesondere das Lavaldüsenelement einfach ausgetauscht werden. Dies ist insbesondere deshalb vorteilhaft, da das Lavaldüsenelement ein Verschleißteil der Injektoreinrichtung ist.

Ferner ist es wichtig, das Lavaldüsenelement einfach auswechseln zu können, um mit geringem Montageaufwand verschiedene Sauerstoffmengen an der Injektorvorrichtung fahren zu können. Bislang musste hierzu die komplette Injektoreinrichtung ausgetauscht werden. Vorliegend können unterschiedliche Lavaldüsenelemente einzeln ausgewechselt werden.

Es versteht sich, dass das Lavaldüsenelement und das Mischerelement in unterschiedlicher Weise miteinander verbunden werden können, beispielsweise durch eine Formschlussverbindung oder dergleichen. Zweckmäßigerweise weist das Lavaldüsenelement ein Außengewinde auf, mittels welchem das Lavaldüsenelement in ein Innengewinde des Mischerelements einschraubbar ist. Hierdurch kann das Lavaldüsenelement in eindeutiger Weise an dem Mischerelement befestigt werden, wodurch insbesondere Montagefehler verhindert werden können.

Bei dem Außengewinde und dem hiermit korrespondierenden Innengewinde kann es sich jeweils um ein bekanntes Rohrgewinde handeln, wodurch die Herstellung weiter vereinfacht werden kann.

Der Aufbau der Injektorvorrichtung kann weiter vereinfacht werden, wenn das Lavaldüsenelement und das Mischerelement konzentrisch innerhalb und/oder an dem Düsenkopfteil angeordnet sind.

Deshalb ist es ebenfalls vorteilhaft, wenn das Lavaldüsenelement mittels des Mischerelements um die Mittellängsachse zentriert angeordnet ist.

Damit der von der Injektoreinrichtung erzeugte Hochgeschwindigkeitsstrahl definiert aus der Injektorvorrichtung ausgetragen werden kann, umfasst die Injektorvorrichtung das Düsenkopfteil. Nun kann die vorliegende Injektorvorrichtung baulich weiter vereinfacht werden, wenn das Düsenkopfteil, in welchem zumindest das Lavaldüsenelement zum Ausgestalten des Ringspalts angeordnet ist, einer Injektorhalteeinrichtung, welche vorzugsweise als zumindest teilweise aus Kupfer bestehende Injektorbox ausgebildet ist, zugeordnet ist.

Insofern ist es vorteilhaft, wenn die Injektorvorrichtung eine Injektorhalteeinrichtung zum Haltern der Injektoreinrichtung im Inneren des metallurgischen Aggregats oder Schmelzgefäßes aufweist, wobei die Injektorhalteeinrichtung das Düsenkopfteil umfasst.

Ist das Düsenkopfteil ein baulicher Bestandteil der Injektorhalteeinrichtung, kann die Injektoreinrichtung, insbesondere das Lavaldüsenelement, besonders einfach an der Injektorvorrichtung ausgetauscht werden.

Besonders vorteilhaft ist es, dass hierdurch das Düsenkopfteil an der Injektoreinrichtung komplett entfällt, da dieser in der Injektorhalteeinrichtung bzw. in dessen Injektorbox integriert ist.

Allein durch die Merkmale im Zusammenhang mit der das Düsenkopfteil umfassenden Injektorhalteeinrichtung kann eine gattungsgemäße Injektorvorrichtung vorteilhaft weiterentwickelt werden, so dass diesbezügliche Merkmale ohne die übrigen Merkmale der Erfindung vorteilhaft sind.

Darüber hinaus kann die vorliegende Injektoreinrichtung weiter vereinfacht und kompakter gebaut werden, wenn das Düsenkopfteil eine Einrichtung zum Anordnen wenigstens eines Zündmittels umfasst, wobei das wenigstens eine Zündmittel derart an dem Düsenkopfteil angeordnet ist, dass das wenigstens eine Zündmittel bis in einen durch das Lavaldüsenelement und das Düsenkopfteil gebildeten Ringspalt hineinkragt. Hierdurch können handelsübliche Zündkerzen zum Zünden des Brenngas-Luft-Gemischs verwendet werden.

Ist das wenigstens eine Zündmittel senkrecht zu der Mittellängsachse der Injektoreinrichtung an dem Düsenkopfteil angeordnet, kann es konstruktiv einfach an der Injektorvorrichtung angeordnet werden. Insbesondere kann hierdurch auf einen Einsatz eines zusätzlichen Zündlanzenelements oder dergleichen, welches von der Rückseite der Injektorvorrichtung in die Injektoreinrichtung montiert wird, verzichtet werden.

Insgesamt können in Bezug auf die Zündung zuverlässigere Bauteile verwendet werden, wodurch die vorliegende Injektorvorrichtung insgesamt wartungsärmer ausgestaltet ist.

Auch die im Zusammenhang mit den Zündmitteln genannten Merkmale sind ohne die übrigen Merkmale der vorliegenden Erfindung vorteilhaft, da allein durch diese Merkmale gattungsgemäße Injektorvorrichtungen vorteilhaft weiterentwickelt werden können.

Eine weitere vorteilhafte Ausführungsvariante, deren Merkmale gattungsgemäße Injektorvorrichtungen auch ohne die übrigen Merkmale der Erfindung fortbilden, sieht vor, dass das Düsenkopfteil eine Vielzahl an Sauerstoffkanälen mit Sauerstoffauslasslöchern aufweist, um Luft bzw. Sauerstoff von außen auf einen aus dem gezündeten Brenngas-Luftgemisch erzeugten Heißgasstrahl leiten zu können.

Mithilfe dieser die Sauerstoffauslasslöcher aufweisenden Sauerstoffkanäle kann eine zusätzliche Umhüllende aus Luft bzw. Sauerstoff um den aus dem gezündeten Brenngas-Luftgemisch erzeugten Heißgasstrahl erzeugt werden, wodurch der Verbrennungsprozess des Brenngas-Luftgemischs nochmals verbessert werden kann.

Hierzu reicht bereits der in der Luft vorhandene Sauerstoff aus. Bedarfsweise kann jedoch auch reiner Sauerstoff kumulativ oder alternativ zugeführt werden.

Diese Sauerstoffkanäle verlaufen innerhalb des Düsenkopfteils vorzugweise diagonal zu dem aus dem Düsenkopfteil austretenden Heißgasstrahl, so dass die hieraus ausströmenden Luftstrahlen noch innerhalb des Düsenkopfteils und damit auch innerhalb der Injektorhalteeinrichtung bzw. dessen Injektorbox auf den Heißgasstrahl treffen.
Zumindest Umgebungsluft kann hierfür baulich besonders einfach bereitgestellt werden, wenn entsprechende Sauerstoffeinlasslöcher der Sauerstoffkanäle am Umfang des Düsenkopfteils angeordnet sind.

Deshalb ist es vorteilhaft, wenn die Sauerstoffkanäle innerhalb des Düsenkopfteils konzentrisch und winkelig um die Mittellängsachse der Injektoreinrichtung herum angeordnet sind. Mit anderen Worten, die Sauerstoffkanäle und die Mittellängsachse schließen jeweils einen Winkel ein.

Sind die Sauerstoffauslasslöcher innerhalb einer Austrittsöffnung des Düsenkopfteils angeordnet, kann der Heißgasstrahl durch die aus den Sauerstoffauslasslöchern austretende Luft im Sinne eines Luftstrahlmantels besonders gut stabilisiert werden.

Die Luft bzw. der reine Sauerstoff kann vorteilhafterweise allein durch die Sogwirkung des Heißgasstrahls durch die Sauerstoffkanäle hindurch gezogen werden. Hierdurch kann vorteilhaft unterbunden werden, dass sich die zusätzlichen Sauerstoffauslasslöcher mit Schlacke oder dergleichen zusetzen. Darüber hinaus ist es hierbei nicht erforderlich, zusätzliche Regellinien im Ventilstand vorzusehen. Auch kann auf ein zusätzliches Freihaltemedium verzichtet werden, da auf kostenlose Umgebungsluft zurückgegriffen werden kann.

Es versteht sich, dass insbesondere das Mischerelement, etwa mit seinem kragenartigen Flansch, auf unterschiedliche Art an dem Düsenkopfteil befestigt werden kann. Beispielsweise mittels einer geschraubten Flanschverbindung.

Vorteilhafter ist es, wenn das Düsenkopfteil eine Schnellspanneinrichtung zum formschlüssigen Verspannen des Lavaldüsenelements und/oder des Mischerelements umfasst. Hierdurch gelingt insbesondere ein schnellerer Austausch des Lavaldüsenelements.

Ist das Mischerelement derart an dem Düsenkopfteil formschlüssig verspannbar, dass das Lavaldüsenelement mittels des Mischerelements an dem Düsenkopfteil lösbar festgelegt ist, kann die Injektoreinrichtung außergewöhnlich einfach von der Injektorhalteeinrichtung demontiert, aber auch sehr einfach und schnell an diese Injektorhalteeinrichtung montiert werden, so dass die Injektorvorrichtung insgesamt wieder schneller einsatzbereit ist.

Eine Montage bzw. Demontage der Injektoreinrichtung kann extrem günstig durchgeführt werden, wenn die Schnellspanneinrichtung Düsenkopfteil seitig an einem einer Austrittsöffnung abgewandten Ende des Düsenkopfteils derart ausgestaltet ist, dass drei oder mehr Spannmittel der Schnellspanneinrichtung konzentrisch um die Mittellängsachse der Injektoreinrichtung angeordnet sind.

Vorzugsweise umfasst die Schnellspanneinrichtung mindestens zwei oder drei am Umfang des Düsenkopfteils verteilte Spannmittel, wodurch die Injektoreinrichtung betriebssicher an dem Düsenkopfteil festgelegt werden kann.

Ein stets dichter Montagesitz kann gewährleistet werden, wenn die Schnellspanneinrichtung Mischerelement seitig ein komprimierbares Ringelement, insbesondere einen Viton®-O-Ring, umfasst.

Insbesondere, wenn eine flüssigkeitsbasierende Kühleinrichtung an der Injektorvorrichtung vorgesehen ist, kann auf zusätzlich zu lösende Schlauchkupplungselemente verzichtet werden, wenn ein entsprechend ausgestaltetes komprimierbares Ringelement, insbesondere ein Viton®-O-Ring, vorhanden ist.
Ein entsprechender Wechsel kann durch eine Person ohne zusätzliche Hebevorrichtung oder dergleichen durchgeführt werden.

An dieser Stelle sei noch angemerkt, dass ebenfalls die im Zusammenhang mit der Schnellspanneinrichtung genannten Merkmale ohne die übrigen Merkmale der vorliegenden Erfindung vorteilhaft sind, da bereits allein durch diese Merkmale gattungsgemäße Injektorvorrichtungen vorteilhaft weiterentwickelt werden können.

Eine bevorzugte Ausführungsvariante sieht vor, dass eine Injektorhalteeinrichtung zum Haltern der Injektoreinrichtung eine Gelenkeinheit umfasst, mittels welcher das Düsenkopfteil gelenkig an der Injektorhalteeinrichtung angeordnet ist. Oftmals ist es in der Metallurgie wünschenswert, wenn der Winkel der Injektoreinrichtung in Bezug auf ein Stahlbad und/oder in Bezug auf Graftitelektroden eines Elektrolichtbogenofens einstellbar wäre. Dies kann mit der vorliegenden Gelenkeinheit erzielt werden.

Weist die Gelenkeinheit ein Gelenkpfannenteil und ein Gelenkkopfteil auf, wobei das Gelenkkopfteil das Düsenkopfteil umfasst, kann die Gelenkeinheit mit wenig Aufwand in die Injektorvorrichtung integriert werden.

Ist das Gelenkkopfteil mittels eines Halteringelements austauschbar an dem Gelenkpfannenteil festlegbar, kann das Düsenkopfteil an der Injektorhalteeinrichtung bzw. deren Injektorbox problemlos ausgetauscht werden.

Vorzugsweise kann der Winkel der Injektoreinrichtung bzw. des Düsenkopfteils mithilfe der Gelenkeinheit in einem Winkelverstellbereich von mindestens +/- 6° verändert werden.

Vorteilhafterweise kann eine Wärmeregulierung insbesondere an dem Gelenkkopfteil über eine mit dem Gelenkpfannenteil ausgebildete Kontaktfläche erfolgen. Die Wärmeleitfähigkeit kann hierbei durch eine entsprechende Wärmeleitpaste noch verbessert werden.

Durch die Merkmale der Gelenkeinheit kann eine gattungsgemäße Injektorvorrichtung vorteilhaft weiterentwickelt werden, so dass diesbezügliche Merkmale auch ohne die übrigen Merkmale der Erfindung vorteilhaft sind.

Alternativ kann das Düsenkopfteil unlösbar an einer Injektorhalteeinrichtung zum Haltern der Injektoreinrichtung angeordnet sein. Hierdurch ist das Düsenkopfteil in der Injektorhalteeinrichtung unlösbar integriert.

In diesem Zusammenhang ist es vorteilhaft, wenn das Düsenkopfteil mit der Injektorhalteeinrichtung stoffschlüssig verbunden ist.

Ferner ist es vorteilhaft, wenn die Injektorvorrichtung eine konduktiv arbeitende Kühleinrichtung umfasst, bei welcher das Düsenkopfteil eine metallische Kühlkontaktfläche umfasst, welche unmittelbar mit einer metallischen Kühlkontaktfläche der Injektorhalteeinrichtung in Wirkkontakt steht.

Insofern ist es vorteilhaft, wenn das Düsenkopfteil eine metallische Kühlkontaktfläche umfasst, welche konduktiv mit einer korrespondierenden metallischen Kühlkontaktfläche der Injektorhalteeinrichtung in Wirkkontakt steht, so dass eine Wärmeübertragung idealerweise von dem Düsenkopfteil zu der Injektorhalteeinrichtung ausschließlich durch Konduktion erzielt werden kann.

Kumulativ oder alternativ kann das Düsenkopfteil zumindest teilweise Wandbereiche eines Kühlmittelkanals einer Kühlmitteleinrichtung einer Injektorhalteeinrichtung zum Haltern der Injektoreinrichtung ausgestalten, wodurch eine Kühlung zusätzlich durch Konvektion unterstützt werden oder gänzlich erfolgen kann.
Somit kann zur Kühlung der Injektoreinrichtung eine metallische Kontaktfläche verwendet werden, welche Bestandteil einer wassergekühlten Injektorbox der Injektorhalteeinrichtung ist.

Vorteilhafterweise besitzt die Injektoreinrichtung selbst keine Kühlwasserkanäle, wodurch die Gefahr eines Wasseraustritts verringert werden kann.

Des Weiteren ist es vorteilhaft, wenn die Injektoreinrichtung durch Eigenmedien, wie etwa Druckluft, Sauerstoff und/oder Erdgas, gekühlt werden kann.

Vorzugsweise ist die Injektoreinrichtung mit Kühlrippen ausgerüstet, wodurch eine Wärmeabgabe an die Umgebung weiter verbessert werden kann. Gleichzeitig kommt es hierbei zu einer Verbrennungsluft-Vorerwärmung, welche den Wirkungsgrad des Pilotmodus verbessern kann.

Zudem erwärmt die Verbrennung im Pilotmodus nicht mehr die gesamte Injektoreinrichtung sondern nur noch das Lavaldüsenelement. Diese Wärme kann jedoch gut in den hinteren Teil, in welchem sich eine entsprechend ausgestaltete Medienzuführeinrichtung befindet, abgeleitet werden. Alle weiteren Bereiche der Injektoreinrichtung bleiben idealerweise kühler.

Allein durch die Merkmale im Zusammenhang mit der Kühlung der Injektorhalteeinrichtung kann eine gattungsgemäße Injektorvorrichtung vorteilhaft weiterentwickelt werden, so dass diesbezügliche Merkmale ohne die übrigen Merkmale der Erfindung vorteilhaft sind.

Der konstruktive Aufbau insbesondere der vorliegenden Injektoreinrichtung kann nochmals verbessert werden, wenn die Injektorvorrichtung eine Medienzuführeinrichtung aufweist, welche an dem Mischerelement angeflanscht ist, wobei die Medienzuführeinrichtung wenigstens ein Außenrohr, ein Mittelrohr und ein Innenrohr umfasst, wobei das Innenrohr zumindest teilweise derart in dem Mittelrohr angeordnet ist, dass zwischen dem Innenrohr und dem Mittelrohr eine Brenngas-Ringleitung angeordnet ist, wobei das Mittelrohr zumindest teilweise derart in dem Außenrohr angeordnet ist, dass zwischen dem Mittelrohr und dem Außenrohr eine Luft- oder Brenngas-Ringleitung angeordnet ist, und wobei das Außenrohr, das Mittelrohr und das Innenrohr konzentrisch um die Mittellängsachse der Injektoreinrichtung angeordnet sind.

Darüber hinaus ist es vorteilhaft, wenn die Brenngas-Ringleitung und die Luft- oder Brenngas-Ringleitung konzentrisch um die Mittellängsachse der Injektoreinrichtung angeordnet sind.

Durch diesen Aufbau der Medienzuführeinrichtung kann die Injektoreinrichtung im Wesentlichen aus einer Vielzahl an Drehteilen zusammen gesetzt und hergestellt werden, wodurch sich die Herstellung der Injektorvorrichtung insgesamt vereinfacht. Insbesondere entfällt ein häufig erforderliches umständliches Ausrichten einzelner Bauteile auf einem Bohrwerk oder dergleichen.

Zudem existieren vorliegend wesentlich weniger Schweißstellen Stahl/Kupfer, wodurch sich der konstruktive Aufwand ebenfalls signifikant reduzieren lässt.

Eine weitere bevorzugte Ausführungsvariante sieht vor, dass innerhalb des Innenrohrs ein Kohlenstofflanzenelement angeordnet ist, welches durch das Mischerelement bis in das Lavaldüsenelement hinein reicht.

Insbesondere für das Erzeugen einer Schaumschlackeschicht ist es vorteilhaft, wenn ein Kohlenstoffinjektor möglichst nahe an der Injektoreinrichtung angeordnet ist. Dies kann sehr einfach erzielt werden, wenn innerhalb des Innenrohrs ein Kohlenstofflanzenelement angeordnet ist.
Ein derart in die vorliegende Injektoreinrichtung integrierter Kohlenstoffinjektor hat zudem den Vorteil, dass keine zusätzliche Halteinrichtung für einen externen Kohlenstoffinjektor vorgesehen werden muss.

Der aus einem ringförmig ausgebildeten Lavaldüsenelementausgang austretende Sauerstoffgasstrahl erzeugt am Ausgang des Kohlenstofflanzenelements eine Sogwirkung, wodurch der Kohlenstoff praktisch beispielsweise in einen Elektrolichtbogenofen hinein gesaugt wird. Hierdurch werden auch verstopfte Leitungsrohre oder dergleichen unwahrscheinlicher.

Ferner wird der Ausgang des Kohlenstofflanzenelements im Pilotmodus der Injektoreinrichtung automatisch von Schlacke oder dergleichen freigehalten. Insofern ist ein zusätzliches Freihaltemittel nicht erforderlich.

Außerdem ist es vorteilhaft, wenn das Kohlenstofflanzenelement ein Keramikrohr umfasst. Ein Keramikrohr ist im Einsatz an der vorliegenden Injektorvorrichtung nicht selbstverzehrend und es muss deshalb auch nicht nachgesetzt werden, wodurch die Injektorvorrichtung wartungsfreundlicher gestaltet ist.

Die Merkmale im Zusammenhang mit dem Kohlenstofflanzenelement entwickeln eine herkömmliche Injektorvorrichtung bereits für sich günstig weiter, so dass diese Merkmale auch ohne die übrigen Merkmale der Erfindung vorteilhaft sind.

Die Aufgabe der Erfindung wird auch von einem Elektrolichtbogenofen gelöst, welcher mit wenigstens einer Injektorvorrichtung nach einem der hier beschriebenen Merkmale ausgerüstet ist. Die Einsatzbereitschaft eines Elektrolichtbogenofen kann betriebssicherer gewährleistet werden, wenn der Elektrolichtbogenofen mit der vorliegenden Injektorvorrichtung ausgerüstet ist.

Weitere Vorteile, Ziele und Eigenschaften vorliegender Erfindung werden anhand anliegender Zeichnung und nachfolgender Beschreibung erläutert, in welchen beispielhaft eine Injektorvorrichtung mit einem entlang einer Mittellängsachse einer Injektoreinrichtung unmittelbar hinter einem Lavaldüsenelement angeordneten Mischerelement dargestellt und beschrieben ist.

Komponenten, welche in den einzelnen Figuren wenigstens im Wesentlichen hinsichtlich ihrer Funktion übereinstimmen, können hierbei mit gleichen Bezugszeichen gekennzeichnet sein, wobei die Komponenten nicht in allen Figuren beziffert und erläutert sein müssen.

In der Zeichnung zeigen:
- Figur 1: schematisch eine teilweise geschnittene Ansicht einer Injektoreinrichtung einer Injektorvorrichtung mit entlang einer Mittellängsachse einer Injektoreinrichtung hintereinander angeordnetem Lavaldüsenelement und Mischerelement;
- Figur 2: schematisch eine Explosionsansicht der in der Figur 1 gezeigten Injektoreinrichtung;
- Figur 3: schematisch eine Detailansicht eines Düsenkopfteils der Injektorvorrichtung mit auf der Mittellängsachse angeordnetem Lavaldüsenelement und Mischer-element;
- Figur 4: schematisch eine einer weitere Detailansicht des Düsenkopfteils aus der Figur 3 mit an dem Düsenkopfteil 41 befestigtem Lavaldüsenelement und Mischer-element;
- Figur 5: schematisch eine Ansicht einer in der Injektorhalteeinrichtung integrierten Gelenkeinheit zum gelenkigen Lagern der Injektoreinrichtung an der Injektorhalteeinrichtung;
- Figur 6: schematisch eine Ansicht der Injektorvorrichtung in einem Pilotmodus;
- Figur 7: schematisch eine Ansicht der Injektorvorrichtung in einem Brennermodus;
- Figur 8: schematisch eine Ansicht der Injektorvorrichtung in einem Lanzenmodus;
- Figur 9: schematisch eine alternative Injektoreinrichtung mit einem Kohlenstofflanzenelement;
- Figur 10: schematisch eine Ansicht der in der Figur 9 gezeigten alternativen Injektoreinrichtung in einem kombinierten Sauerstoff-Kohlenstoff-Modus; und
- Figur 11: schematisch eine Explosionsansicht der in den Figuren 9 und 10 gezeigten alternativen Injektoreinrichtung.

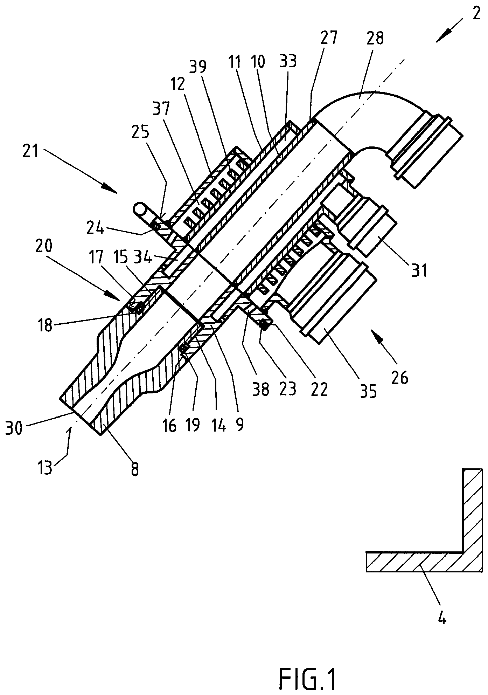

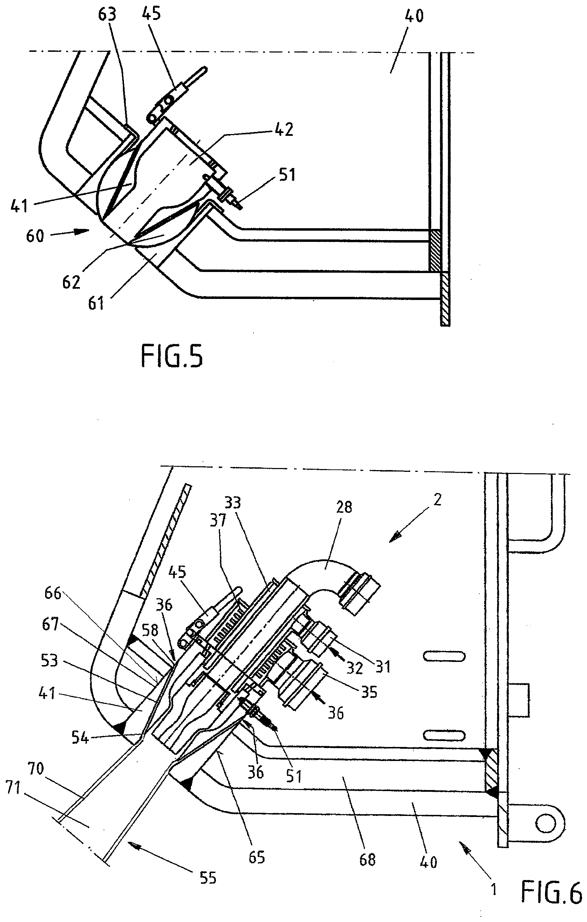

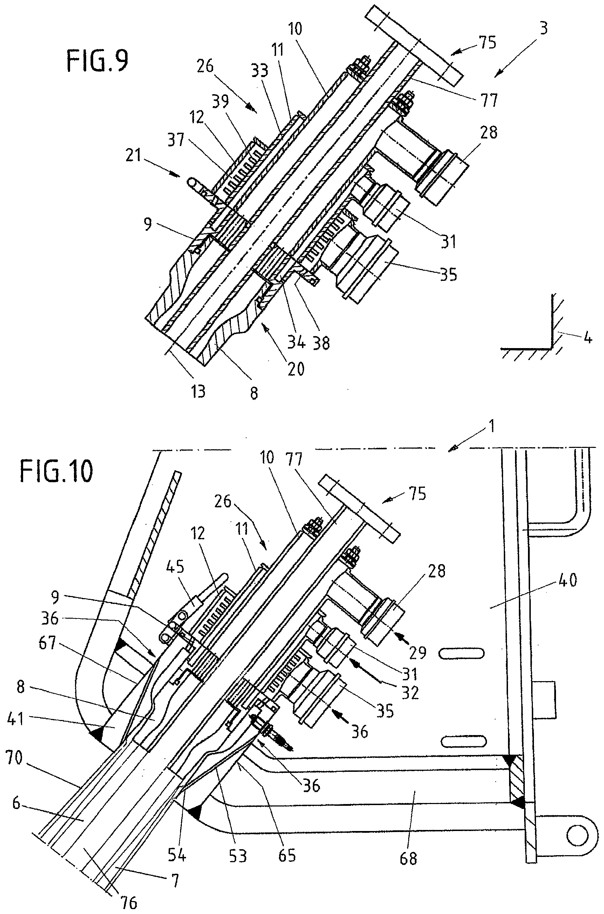

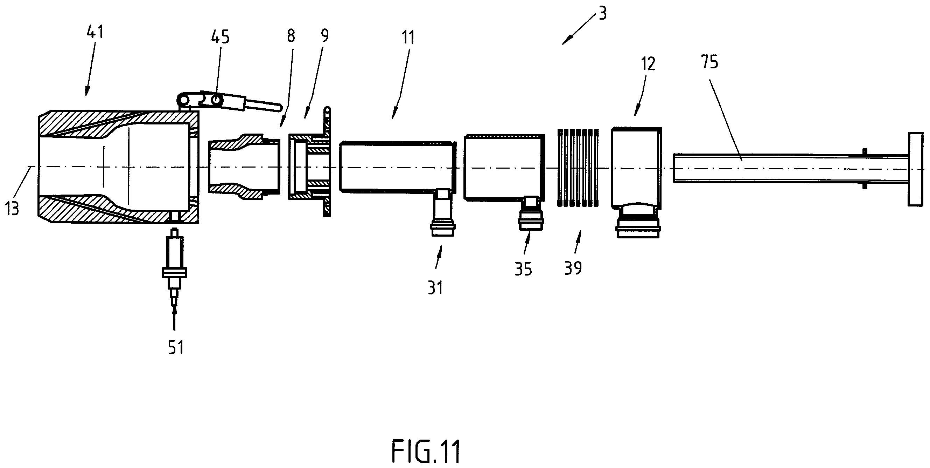

Die in den Figuren 1 bis 11 exemplarisch teilweise gezeigte Injektorvorrichtung 1 (siehe speziell Figuren 6 bis 8 und 10) kann mit unterschiedlich ausgestalteten Injektoreinrichtungen 2 (vgl. Figuren 1 bis 8) bzw. 3 (vgl. Figuren 9 bis 11) ausgerüstet sein.

Die Injektorvorrichtung 1 dient in diesem Ausführungsbeispiel zum Aufblasen oder Einblasen von sauerstoffreichen Gasen und/oder von Kohlenstoff in einen an sich bekannten und deshalb hier nicht weiter gezeigten und beschriebenen Elektrolichtbogenofen 4.

Die jeweilige Injektoreinrichtung 2 bzw. 3 dient zum Erzeugen eines Hochgeschwindigkeitsgasstrahls 5 (siehe Figuren 6, 7, 8 und 10) beispielsweise aus einem Sauerstoffgasstrahl 6 und einem entzündeten Brenngas-Luft-Gemischstrahl 7.

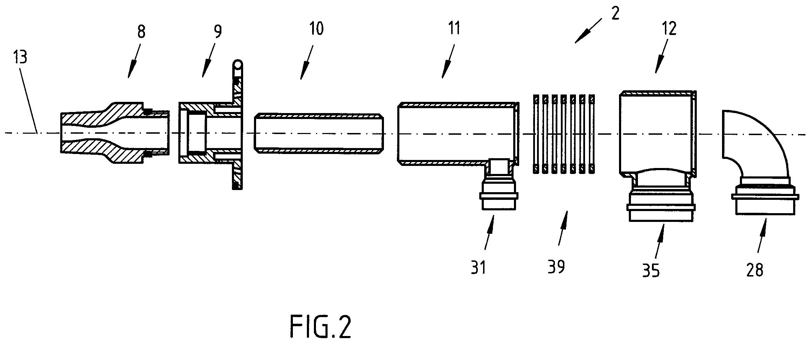

Wie insbesondere auch gemäß der Darstellung der Figur 2 gut erkennbar ist, setzt sich die Injektoreinrichtung 2 baulich einfach im Wesentlichen aus einem Lavaldüsenelement 8, einem Mischerelement 9, einem Innenrohrteil 10, einem Mittelrohrteil 11 und einem Außenrohrteil 12 zusammen.

Bemerkenswert ist es, dass alle vorgenannten Bauteile 8 bis 12 gemeinsam entlang einer Mittellängsachse 13 und koaxial zu der Mittellängsachse 13 der Injektoreinrichtung 2 angeordnet sind.

Insbesondere das Lavaldüsenelement 8 und das Mischerelement 9 sind gemeinsam entlang der Mittellängsachse 13 der Injektoreinrichtung 2 unmittelbar derart hintereinander angeordnet, dass im Montagezustand der Injektoreinrichtung 2 das Mischerelement 9 direkt an dem Lavaldüsenelement 8 befestigt ist, wie insbesondere gemäß der Darstellung der Figur 1 zu erkennen ist.

In diesem Ausführungsbeispiel ist das Mischerelement 9 auf das Lavaldüsenelement 8 aufgeschraubt. Hierzu sind das Lavaldüsenelement 8 mit einem Außengewinde 14 und das Mischerelement 9 mit einem entsprechenden Innengewinde 15 ausgestattet.

Darüber hinaus ist zwischen dem Außengewinde 14 und einem durch eine Schulter 16 des Lavaldüsenelements 8 ausgebildeten Anschlag 17 für das Mischerelement 9 noch eine Umfangsnut 18 zur Aufnahme eines O-Rings 19 vorgesehen, mittels welchem der Schnittstellenbereich 20 zwischen dem Lavaldüsenelement 8 und dem Mischerelement 9 sicher abgedichtet ist.

Das Mischerelement 9 weist einen kragenartigen Flansch 21 auf, in welchem eine Nut 22 zur Aufnahme eines komprimierbaren Ringelements 23, insbesondere eines Viton®-O-Rings 24, platziert ist.

An der Rückseite 25 dieses kragenartigen Flanschs 21 ist eine Medienzuführeinrichtung 26 angeflanscht, welche im Wesentlichen aus dem Innenrohrteil 10, dem Mittelrohrteil 11 und dem Außenrohrteil 12 besteht.

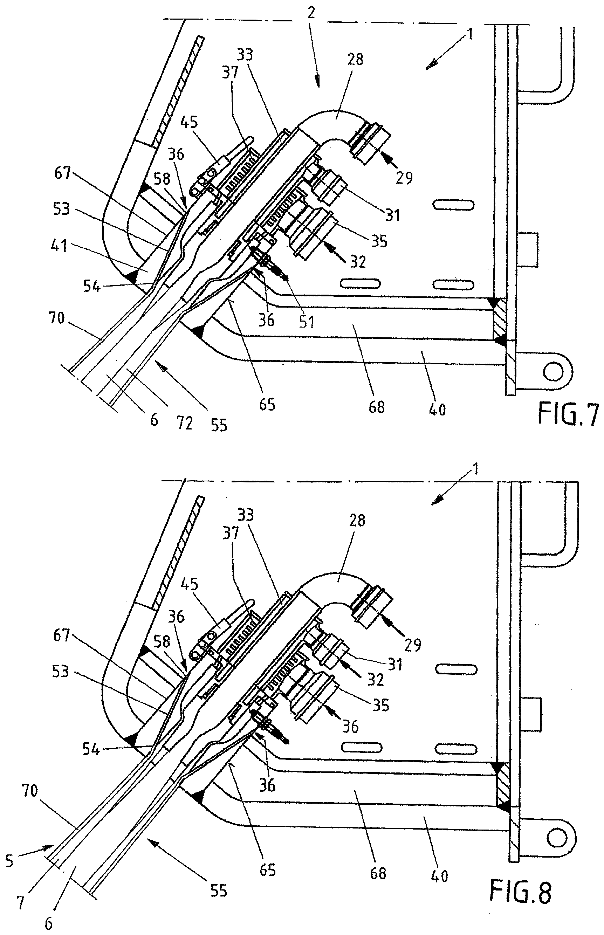

Am hinteren Ende 27 des Innerohrteils 10 ist ein Sauerstoffanschlussteil 28 befestigt, durch welches hindurch Sauerstoff 29 (vgl. Figuren 7 und 8) in das Innenrohrteil 10, in das Mischerelement 9 und schließlich bis in das Lavaldüsenelement 8 eingeleitet werden kann. Der derart bis in das Lavaldüsenelement 8 eingeleitete Sauerstoff 29 wird durch das Lavaldüsenelement 8 in an sich bekannter Weise beschleunigt und tritt als Sauerstoffgasstrahl 6 (vgl. Figuren 7 und 8) aus der Austrittsöffnung 30 des Lavaldüsenelements 8 aus.

Seitlich an dem Mittelrohrteil 11 ist ein Brenngasanschlussteil 31 vorgesehen, mittels welchem der Injektoreinrichtung 2 Brenngas 32, in der Regel Erdgas, (vgl. Figuren 6 und 7) zugeführt werden kann. Hierzu sind das Mittelrohrteil 11 und das Innenrohrteil 10 derart zueinander angeordnet, dass zwischen ihnen eine Brenngas-Ringleitung 33 ausgebildet ist. Durch diese Brenngas-Ringleitung 33 gelangt das Brenngas 32 bis in einen im Wesentlichen axial innerhalb des Mischerelements 9 verlaufenden Brenngaskanal 34 des Mischerelements 9.

Ebenfalls seitlich an dem Außenrohrteil 12 ist ein Luft- oder Brenngasanschlussteil 35 vorgesehen, mittels welchem der Injektoreinrichtung 2 Luft 36 (vgl. Figuren 6 und 8) oder alternativ auch Brenngas 32, in der Regel Erdgas, (vgl. Figur 7) zugeführt werden kann, je nachdem in welchem Modus sich die Injektoreinrichtung 2 befindet, wie später noch erläutert ist. Hierzu sind das Mittelrohrteil 11 und das Außenrohrteil 12 derart zueinander angeordnet, dass zwischen ihnen eine Luft- oder Brenngas-Ringleitung 37 ausgebildet ist. Durch diese Luft- oder Brenngas-Ringleitung 37 gelangt die Luft 36 oder das Brenngas 32 bis in einen im Wesentlichen axial innerhalb des Mischerelements 9 verlaufenden Luftkanal 38 des Mischerelements 9.

An der Medienzuführeinrichtung 26 sind an der Außenseite des Mittelrohrteils 11 darüber hinaus noch Kühlrippen 39 angeordnet, über welche Wärme von der Injektoreinrichtung 2 an das sich gerade in dem Luft- oder Brenngas-Ringleitung 37 befindlichen Medium (Luft 36 oder Brenngas 32) abgegeben werden kann, wodurch dieses Medium entsprechend vorgewärmt zur Verfügung gestellt werden kann.

Die derart kompakt und sehr klein gebaute Injektoreinrichtung 2 kann konstruktiv einfach an einer Injektorhalteeinrichtung 40 innerhalb des Elektrolichtbogenofens 4 gehaltert werden, indem das an dem Mischerelement 9 angeschraubte Lavaldüsenelement 8 in ein der Injektorhalteeinrichtung 40 zugeordnetes Düsenkopfteil 41 eingesteckt und mittels des kragenartigen Flanschs 21 des Mischerelements 9 an dem Düsenkopfteil 41 festgelegt wird (siehe Figuren 5 bis 8, 10 und 11).

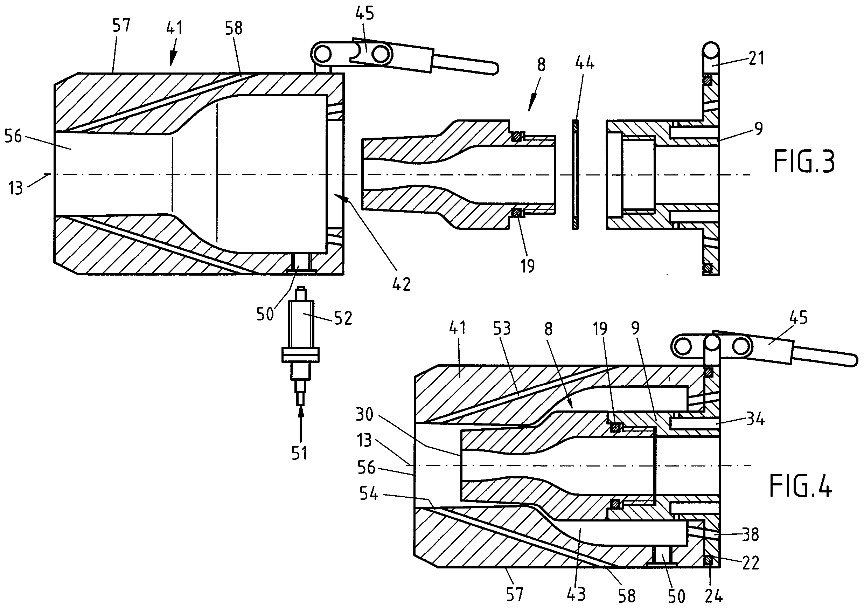

In das insbesondere in den Figuren 3 und 4 näher gezeigte Düsenkopfteil 41 können das Lavaldüsenelement 8 und teilweise auch das daran befestigte Mischerelement 9 durch eine Montageöffnung 42 derart eingesteckt werden, dass zwischen dem Düsenkopfteil 41 und insbesondere dem Lavaldüsenelement 8 ein Ringspalt 43 geschaffen ist, in welchem der Brenngaskanal 34 und ein Luftkanal 38 des Mischerelements 9 münden.

Der Querschnitt des Ringspalts 43 kann zumindest bereichsweise eingestellt werden, indem zwischen dem Anschlag 17 des Lavaldüsenelements 8 und dem Mischerelement 9 gegebenenfalls unterschiedlich dicke Distanzringscheiben 44 platziert werden, wodurch der Abstand zwischen dem Lavaldüsenelement 8 und dem Mischerelement 9 unterschiedlich gewählt werden kann.
Zum schnelleren Festlegen der Injektoreinrichtung 2 an dem Düsenkopfteil 41 weist letzterer eine Schnellspanneinrichtung 45 zum formschlüssigen Verspannen des Lavaldüsenelements 8 und/oder des Mischerelements 9 an dem Düsenkopfteil 41 auf.

Darüber hinaus umfasst das Düsenkopfteil 41 eine Einrichtung 50 zum Anordnen wenigstens eines Zündmittels 51 in Gestalt einer handelsüblichen Zündkerze 52. Das wenigstens eine Zündmittel 51 ist hierbei derart an dem Düsenkopfteil 41 angeordnet, dass es bis in den durch das Lavaldüsenelement 8 und das Düsenkopfteil 41 gebildeten Ringspalt 43 hineinkragt, um dort das befindliche Brenngas-Luft-Gemisch 7 zu entzünden.

Um die Verbrennung des Brenngas-Luft-Gemischstrahls 7 zu verbessern, sind an dem Düsenkopfteil 41 eine Vielzahl an Sauerstoffkanälen 53 (hier nur exemplarisch beziffert) mit Sauerstoffauslasslöchern 54 vorgesehen, um Luft 36 von außen auf einen aus dem gezündeten Brenngas-Luftgemisch 7 erzeugten Heißgasstrahl 55 (vgl. Figuren 6 bis 8 und 10), welcher aus einer Austrittsöffnung 56 des Düsenkopfteils 41 strömt, leiten zu können.

Um insbesondere Umgebungsluft durch die Sauerstoffkanäle 53 ansaugen zu können, sind an der Mantelfläche 57 des Düsenkopfteils 41 entsprechende Sauerstoffeinlasslöcher 58 angeordnet.

Eine feste Verbindung zwischen dem Düsenkopfteil 41 und der Injektoreinrichtung 40 kann erzielt werden, wenn das Düsenkopfteil 41 stoffschlüssig, beispielsweise durch Verschweißung, und somit unlösbar an der Injektoreinrichtung 40 festgelegt ist (vgl. Figuren 6 bis 8 und 10).

Alternativ kann das Düsenkopfteil 41 auch gelenkig an der Injektorhalteeinrichtung 40 befestigt sein, wie beispielhaft gemäß der Darstellung der Figur 5 gezeigt ist. Hierbei umfasst die Injektorhalteeinrichtung 40 eine Gelenkeinheit 60, mittels welcher das Düsenkopfteil 41 gelenkig an der Injektorhalteeinrichtung 40 anordenbar ist. An der Injektorhalteeinrichtung 40 ist ein Gelenkpfannenteil 61 ausgestaltet, während das Düsenkopfteil 41 als ein Gelenkkopfteil 62 ausgestaltet ist, welches beweglich in dem Gelenkpfannenteil 61 eingebettet ist. Das Gelenkkopfteil 62 kann mithilfe eines in das Gelenkpfannenteil 61 einschraubbaren Halteringelements 63 gegenüber dem Gelenkpfannenteil 61 festgelegt werden, sobald ein gewünschter Winkel der Injektoreinrichtung 2 eingestellt bleibt.

Die Kühlung der Injektoreinrichtung 2 kann ausreichend sichergestellt werden, wenn die Injektorvorrichtung 1 eine konduktiv arbeitende Kühleinrichtung umfasst, bei welcher das Düsenkopfteil 41 eine metallische Kühlkontaktfläche 65 (hier nur exemplarisch beziffert) umfasst, welche unmittelbar mit einer metallischen Kühlkontaktfläche 66 der Injektorhalteeinrichtung 40 in Wirkkontakt steht.

Bei dem hier gezeigten Ausführungsbeispiel gestaltet das Düsenkopfteil 41 zumindest teilweise Wandbereiche 67 (hier nur exemplarisch beziffert) eines Kühlmittelkanals 68 einer Kühlmitteleinrichtung der Injektorhalteeinrichtung 40 aus.

Vorteilhafterweise besitzt die Injektoreinrichtung 2 selbst keine Kühlmittelkanäle, wodurch sich eine Montage und eine Demontage der Injektoreinrichtung 2 an der Injektorhalteeinrichtung 40 besonders einfach durchführen lassen.

Gemäß der Darstellung der Figur 6 befindet sich die Injektoreinrichtung 2 in einem Pilotmodus, in welchem der Heißgasstrahl 55 lediglich aus einer von einem Luftsauerstoffmantel 70 umgebenen Brenngasflamme 71 aus Brenngas 32 besteht, um eine Verschlackung der Injektoreinrichtung 2 zu verhindern. Hierbei wird der Injektoreinrichtung 2 durch das Luft- oder Brenngasanschlussteil 35 Luft 36 und durch das Brenngasanschlussteil 31 Brenngas 32 in Form von Erdgas zugeführt.

Gemäß der Darstellung der Figur 7 befindet sich die Injektoreinrichtung 2 in einem Brennermodus, in welchem der Heißgasstrahl 55 aus dem Sauerstoffgasstrahl 6, aus einem Brenngasstrahl 72 aus Brenngas 32 und aus dem Luftsauerstoffmantel 70 besteht, um insbesondere in den Elektrolichtbogenofen 4 eingefüllten Schrott schneller schmelzen zu können. Hierbei wird der Injektoreinrichtung 2 durch das Luft- oder Brenngasanschlussteil 35 Brenngas 32 in Form von Erdgas und durch das Sauerstoffanschlussteil 28 Sauerstoff 29 zugeführt.

Gemäß der Darstellung der Figur 8 befindet sich die Injektoreinrichtung 2 in einem Lanzenmodus, in welchem der Heißgasstrahl 55 aus dem Sauerstoffgasstrahl 6, aus dem Brenngas-Luft-Gemischstrahl 7 und aus dem Luftsauerstoffmantel 70 besteht, um insbesondere Sauerstoff in eine in dem Elektrolichtbogenofen 4 befindliche Schmelze einbringen zu können. Hierbei wird der Injektoreinrichtung 2 durch das Luft- oder Brenngasanschlussteil 35 Luft 36, durch das Brenngasanschlussteil 31 Brenngas 32 in Form von Erdgas und durch das Sauerstoffanschlussteil 28 Sauerstoff 29 zugeführt. Der Heißgasstrahl 55 liegt hierbei in Form des Hochgeschwindigkeitsgasstrahls 5 vor.

Eine alternative Injektoreinrichtung 3 ist in den Figuren 9 bis 11 dargestellt, wobei im folgenden nur die Merkmale erläutert werden, durch welche sich dieses zweite Ausführungsbeispiel von dem ersten Ausführungsbeispiel unterscheidet.

Die alternative Injektoreinrichtung 3 besitzt im Wesentlichen den gleichen Aufbau wie die zuvor erläuterte Injektoreinrichtung 2. Die alternative Injektoreinrichtung 3 zeichnet sich jedoch noch durch ein innerhalb des Innenrohrs 10 angeordnetes Kohlenstofflanzenelement 75 aus, welches durch das Mischerelement 9 bis in das Lavaldüsenelement 8 hinein reicht, um zusätzlich noch Kohlenstoff 76 in den Elektrolichtoffen 4 einbringen zu können. Vorteilhafterweise kann hierdurch auf eine zusätzliche Kohlenstoffinjektoreinrichtung verzichtet werden. Das Kohlenstofflanzenelement 75 ist besonders widerstandsfähig ausgeführt, da es ein Keramikrohr 77 umfasst.

Gemäß der Darstellung der Figur 10 befindet sich die alternative Injektoreinrichtung 3 in einem kombinierten Sauerstoff-Kohlenstoff-Modus, in welchem der Heißgasstrahl 55 aus dem Kohlenstoff 76, aus dem ringförmigen Sauerstoffgasstrahl 6, aus dem Brenngas-Luft-Gemischstrahl 7 und aus dem Luftsauerstoffmantel 70 besteht, um insbesondere Sauerstoff und Kohlenstoff in eine in dem Elektrolichtbogenofen 4 befindliche Schmelze einbringen zu können. Hierbei wird der alternativen Injektoreinrichtung 3 durch das Luft- oder Brenngasanschlussteil 35 Luft 36, durch das Brenngasanschlussteil 31 Brenngas 32 in Form von Erdgas und durch das Sauerstoffanschlussteil 28 Sauerstoff 29 zugeführt. Zusätzlich wird der alternativen Injektoreinrichtung 3 durch das Kohlenstofflanzenelement 75 noch Kohlenstoff 76 zugeführt.

An dieser Stelle sei explizit darauf hingewiesen, dass die Merkmale der vorstehend bzw. in den Ansprüchen und/oder Figuren beschriebenen Lösungen gegebenenfalls auch kombiniert werden können, um die erläuterten Merkmale, Effekte und Vorteile entsprechend kumuliert umsetzen bzw. erzielen zu können.

Es versteht sich, dass es sich bei den vorstehend erläuterten Ausführungsbeispielen lediglich um erste Ausgestaltungen der erfindungsgemäßen Injektorvorrichtung handelt. Insofern beschränkt sich die Ausgestaltung der Erfindung nicht auf diese Ausführungsbeispiele.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste:

- 1: Injektorvorrichtung
- 2: Injektoreinrichtung
- 3: alternative Injektoreinrichtung
- 4: Elektrolichtbogenofen
- 5: Hochgeschwindigkeitsgasstrahl
- 6: Sauerstoffgasstrahl
- 7: Brenngas-Luft-Gemischstrahl bzw. Brenngas-Luft-Gemisch
- 8: Lavaldüsenelement
- 9: Mischerelement
- 10: Innenrohrteil
- 11: Mittelrohrteil
- 12: Außenrohrteil
- 13: Mittellängsachse
- 14: Außengewinde
- 15: Innengewinde
- 16: Schulter
- 17: Anschlag
- 18: Umfangsnut
- 19: O-Ring
- 20: Schnittstellenbereich
- 21: kragenartiger Flansch
- 22: Nut
- 23: komprimierbares Ringelement
- 24: Viton®-O-Ring
- 25: Rückseite
- 26: Medienzuführeinrichtung
- 27: hinteres Ende
- 28: Sauerstoffanschlussteil
- 29: Sauerstoff
- 30: Austrittsöffnung
- 31: Brenngasanschlussteil
- 32: Brenngas
- 33: Brenngas-Ringleitung
- 34: Brenngaskanal
- 35: Luft- oder Brenngasanschlussteil
- 36: Luft
- 37: Luft- oder Brenngas-Ringleitung
- 38: Luftkanal
- 39: Kühlrippen
- 40: Injektorhalteeinrichtung
- 41: Düsenkopfteil
- 42: Montageöffnung
- 43: Ringspalt
- 44: Distanzringscheiben
- 45: Schnellspanneinrichtung
- 50: Einrichtung zum Anordnen
- 51: Zündmittel
- 52: Zündkerze
- 53: Sauerstoffkanäle
- 54: Sauerstoffauslasslöcher
- 55: Heißgasstrahl
- 56: Austrittsöffnung
- 57: Mantelfläche
- 58: Sauerstoffeinlasslöcher
- 60: Gelenkeinheit
- 61: Gelenkpfannenteil
- 62: Gelenkkopfteil
- 63: Halteringelement
- 65: metallische Kühlkontaktfläche
- 66: metallische Kühlkontaktfläche
- 67: Wandbereiche
- 68: Kühlmittelkanal
- 70: Luftsauerstoffmantel
- 71: Brenngasflamme
- 72: Brenngasstrahl
- 75: Kohlenstofflanzenelement
- 76: Kohlenstoff
- 77: Keramikrohr

## Patentansprüche

1. Injektorvorrichtung (1) zur pyrometallurgischen Behandlung von Metallen, Metallschmelzen und/oder Schlacken in einem metallurgischen Aggregat oder Schmelzgefäß mit einer Injektoreinrichtung (2, 3) zum Erzeugen eines Hochgeschwindigkeitsgasstrahls (5) aus einem Sauerstoffgasstrahl (6) und einem entzündeten Brenrigas-Luft-Gemischstrahl (7), bei welcher die Injektoreinrichtung (2, 3) ein in einem Düsenkopfteil (41) angeordnetes Lavaldüsenelement (8) zum Erzeugen des Sauerstoffgasstrahls (6) umfasst, und bei welcher das Brenngas-Luft-Gemisch (7) mittels eines Mischerelements (9) zum Mischen von Brenngas (32) und Luft (36) mischbar ist, **dadurch gekennzeichnet, dass** das Lavaldüsenelement (8) und das Mischerelement (9) innerhalb und/oder an dem Düsenkopfteil (41) gemeinsam entlang der Mittellängsachse (13) der Injektoreinrichtung (2, 3) voneinander lösbar hintereinander derart angeordnet sind, dass zwischen dem Düsenkopfteil (41) und dem Lavaldüsenelement (8) ein Ringspalt (43) entsteht, In welchen ein Brenngaskanal (34) und ein Luftkanal (38) des Mischerelements (9) münden.

2. Injektorvorrichtung (1) nach Anspruch 1, **dadurch gekennzeichnet, dass** das Lavaldüsenelement (8) und das Mischerelement (9) durch Zerspannung gefertigte Drehbauteile sind, welche kraft- und/oder formschlüssig unmittelbar miteinander verbunden sind.

3. Injektorvorrichtung (1) nach Anspruch 2, **dadurch gekennzeichnet, dass** die Größe des Ringspalts (43) in Abhängigkeit von einem axialen Abstand zwischen dem Lavaldüsenelement (8) und dem Mischerelement (9) einstellbar ist.

4. Injektorvorrichtung (1) nach Anspruch 3, **dadurch gekennzeichnet, dass** der axiale Abstand zwischen dem Lavaldüsenelement (8) und dem Mischerelement (9) mittels unterschiedlicher Distanzringscheiben (44) einstellbar ist.

5. Injektorvorrichtung (1) nach einem der Ansprüche 1 bis 4, **dadurch gekennzeichnet, dass** das Lavaldüsenelement (8) ein Außengewinde (14) aufweist, mittels welchem das Lavaldüsenelement (8) in ein Innengewinde (15) des Mischerelements (9) einschraubbar Ist.

6. Injektorvorrichtung (1) nach einem der Ansprüche 1 bis 5, **dadurch gekennzeichnet, dass** das Lavaldüsenelement (8) und das Mischerelements (9) konzentrisch innerhalb und/oder an dem Düsenkopfteil (41) angeordnet sind.

7. Injektorvorrichtung (1) nach einem der Ansprüche 1 bis 6, **dadurch gekennzeichnet, dass** das Lavaldüsenelement (8) mittels des Mischerelements (9) um die Mittellängsachse (13) der Injektoreinrichtung (2, 3) zentriert angeordnet ist.

8. Injektorvorrichtung (1) nach einem der Ansprüche 1 bis 7, **dadurch gekennzeichnet, dass** die Injektorvorrichtung (1) eine Injektorhalteeinrichtung (40) zum Halten der Injektoreinrichtung (2, 3) im Inneren des metallurgischen Aggregats oder Schmelzgefäßes aufweist, wobei die Injektorhalteeinrichtung (40) das Düsenkopfteil (41) umfasst.

9. Injektorvorrichtung (1) nach einem der Ansprüche 1 bis 8, **dadurch gekennzeichnet, dass** das Düsenkopftell (41) eine Einrichtung (50) zum Anordnen wenigstens eines Zündmittels (51) umfasst, wobei das wenigstens eine Zündmittel (51) derart an dem Düsenkopfteil (41) angeordnet ist, dass das wenigstens eine Zündmittel (51) bis in einen durch das Lavaldüsenelement (8) und das Düsenkopfteil (41) gebildeten Ringspalt (43) hineinkragt.

10. Injektorvorrichtung (1) nach Anspruch 9, **dadurch gekennzeichnet, dass** das wenigstens eine Zündmittel (51) senkrecht zu der Mittellängsachse (13) der Injektoreinrichtung (2, 3) an dem Düsenkopfteil (41) angeordnet ist.

11. Injektorvorrichtung (1) nach einem der Ansprüche 1 bis 10, **dadurch gekennzeichnet, dass** das Düsenkopfteil (41) eine Vielzahl an Sauerstoffkanälen (53) mit Sauerstoffauslasslöchern (54) aufweist, um Luft (36) bzw. Sauerstoff von außen auf einen aus dem gezündeten Brenngas-Luftgemisch (7) erzeugten Heißgasstrahl (55) leiten zu können.

12. Injektorvorrichtung (1) nach Anspruch 11, **dadurch gekennzeichnet, dass** die Sauerstoffkanäle (53) innerhalb des Düsenkopfteils (41) konzentrisch und winkelig um die Mittellängsachse (13) der Injektoreinrichtung (2, 3) herum angeordnet sind.

13. Injektorvorrichtung (1) nach Anspruch 11 oder 12, **dadurch gekennzeichnet, dass** die Sauerstoffauslasslöcher (54) innerhalb einer Austrittsöffnung (56) des Düsenkopfteils (41) angeordnet sind.

14. Injektorvorrichtung (1) nach einem der Ansprüche 1 bis 13, **dadurch gekennzeichnet, dass** das Düsenkopfteil (41) eine Schnellspanneinrichtung (45) zum formschlüssigen Verspannen des Lavaldüsenelements (8) und/oder des Mischerelements (9) umfasst.

15. Injektorvorrichtung (1) nach Anspruch 14 **dadurch gekennzeichnet, dass** das Mischerelement (9) derart an dem Düsenkopfteil (41) formschlüssig verspannbar ist, dass das Lavaldüsenelement (8) mittels des Mischerelements (9) an dem Düsenkopfteil (41) lösbar festgelegt ist.

16. Injektorvorrichtung (1) nach Anspruch 14 oder 15, **dadurch gekennzeichnet, dass** die Schnellspanneinrichtung (45) des Düsenkopfteils (41) seitig an einem einer Austrittsöffnung (56) abgewandten Ende des Düsenkopfteils (41) derart ausgestaltet ist, dass drei oder mehr Spannmittel der Schnellspanneinrichtung (45) konzentrisch um die Mittellängsachse (13) der Injektoreinrichtung (2, 3) angeordnet sind.

17. Injektorvorrichtung (1) nach einem der Ansprüche 14 bis 16, **dadurch gekennzeichnet, dass** das Mischerelement (9) seitig ein komprimierbares Ringelement (23), insbesondere einen Viton®-O-Ring (24), umfasst.

18. Injektorvorrichtung (1) nach einem der Ansprüche 1 bis 17, **dadurch gekennzeichnet, dass** eine Injektorhalteeinrichtung (40) zum Haltern der Injektoreinrichtung (2, 3) eine Gelenkeinheit (60) umfasst, mittels welcher das Düsenkopfteil (41) gelenkig an der Injektorhalteeinrichtung (40) angeordnet ist.

19. Injektorvorrichtung (1) nach Anspruch 18, **dadurch gekennzeichnet, dass** die Gelenkeinheit (60) ein Gelenkpfannenteil (61) und ein Gelenkkopfteil (62) aufweist, wobei das Gelenkkopfteil (62) das Düsenkopfteil (41) umfasst.

20. Injektorvorrichtung (1) nach Anspruch 18 oder 19, **dadurch gekennzeichnet, dass** das Gelenkkopfteil (62) mittels eines Halteringelements (63) austauschbar an dem Gelenkpfannenteil (61) festlegbar ist.

21. Injektorvorrichtung (1) nach einem der Ansprüche 1 bis 20, **dadurch gekennzeichnet, dass** das Düsenkopfteil (41) unlösbar an einer Injektorhalteeinrichtung (40) zum Haltern der Injektoreinrichtung (2, 3) angeordnet ist.

22. Injektorvorrichtung (1) nach Anspruch 21, **dadurch gekennzeichnet, dass** das Düsenkopfteil (41) mit der Injektorhalteeinrichtung (40) stoffschlüssig verbunden Ist.

23. Injektorvorrichtung (1) nach einem der Ansprüche 1 bis 22, **dadurch gekennzeichnet, dass** die Injektorvorrichtung (1) eine konduktiv arbeitende Kühleinrichtung umfasst, bei welcher das Düsenkopfteil (41) eine metallische Kühlkontaktfläche (65) umfasst, welche unmittelbar mit einer metallischen Kühlkontaktfläche (66) einer Injektorhalteeinrichtung (40) zum Haltern der Injektoreinrichtung (2, 3) In Wirkkontakt steht.

24. Injektorvorrichtung (1) nach einem der Ansprüche 1 bis 23, **dadurch gekennzeichnet, dass** das Düsenkopfteil (41) zumindest teilweise Wandbereiche (67) eines Kühlmittelkanals (68) einer Kühlmitteleinrichtung der Injektorhalteeinrichtung (40) ausgestaltet.

25. Injektorvorrichtung (1) nach einem der Ansprüche 1 bis 24, **dadurch gekennzeichnet, dass** die Injektorvorrichtung (1) eine Medienzuführeinrichtung (26) aufweist, welche an dem Mischerelement (9) angeflanscht ist, wobei die Medienzuführeinrichtung (26) wenigstens ein Außenrohr (12), ein Mitteirohr (11) und ein Innenrohr (10) umfasst, wobei das Innenrohr (10) zumindest teilweise derart in dem Mittelrohr (11) angeordnet ist, dass zwischen dem Innenrohr (10) und dem Mittelrohr (11) eine Brenngas-Ringleitung (33) angeordnet ist, wobei das Mittelrohr (11) zumindest teilweise derart In dem Außenrohr (12) angeordnet ist, dass zwischen dem Mittelrohr (11) und dem Außenrohr (12) eine Luft- oder Brenngas-Ringleitung (37) angeordnet ist, und wobei das Außenrohr (12), das Mittelrohr (11) und das Innenrohr (10) konzentrisch um die Mittellängsachse (13) der Injektoreinrichtung (2, 3) angeordnet sind.

26. Injektorvorrichtung (1) nach Anspruch 25, **dadurch gekennzeichnet, dass** die Brenngas-Ringleitung (33) und die Luft- oder Brenngas-Ringleitung (37) konzentrisch um die Mittellängsachse (13) der Injektoreinrichtung (2, 3) angeordnet sind.

27. Injektorvorrichtung (1) nach Anspruch 25 oder 26, **dadurch gekennzeichnet, dass** innerhalb des Innenrohrs (10) ein Kohlenstofflanzenelement (75) angeordnet ist, welches durch das Mischerelement (9) bis in das Lavaldüsenelement (8) hinein reicht.

28. Injektorvorrichtung (1) nach Anspruch 27, **dadurch gekennzeichnet, dass** das Kohlenstofflanzenelement (75) ein Keramikrohr (77) umfasst.

29. Elektrolichtbogenofen (4), **gekennzeichnet durch** wenigstens eine Injektorvorrichtung (1) nach einem der vorstehenden Ansprüche.

## Claims

1. Injector device (1) for pyrometallurgical treatment of metals, metal melts and/or slags in a metallurgical unit or smelting vessel with injector equipment (2, 3) for producing a high-velocity gas jet (5) from an oxygen gas jet (6) and an ignited combustible-gas/air mixture jet (7), in which the injector equipment (2, 3) comprises a Laval nozzle element (8, which is arranged in a nozzle head part (41), for generating the oxygen gas jet (6) and in which the combustible-gas/air mixture (7) is mixable by means of a mixer element (8) for mixing combustible gas (32) and air (36), **characterised in that** the Laval nozzle element (8) and the mixer element (9) are so arranged within and/or at the nozzle head part (41) in common along the centre longitudinal axis (13) of the injector equipment (2, 3) in succession and separably from one another that an annular gap (43) into which a combustible gas channel (34) and an air channel (38) of the mixer element (9) open arises between the nozzle head part (41) and the Laval nozzle element (8).

2. Injector device (1) according to claim 1, **characterised in that** the Laval nozzle (8) and the mixer element (9) are rotary components which are produced by machining and which are directly connected together by frictional couple and/or mechanically positive couple.

3. Injector device (1) according to claim 2, **characterised in that** the size of the annular gap (43) is settable in dependence on an axial spacing between the Laval nozzle element (8) and the mixer element (9).

4. Injector device (1) according to claim 3, **characterised in that** the axial spacing between the Laval nozzle element (8) and the mixer element (9) is settable by means of different spacer washers (44).

5. Injector device (1) according to any one of claims 1 to 4, **characterised in that** Laval nozzle element (8) has an external thread (14), by means of which the Laval nozzle element (8) can be screwed into an internal thread (15) of the mixer element (9).

6. Injector device (1) according to any one of claims 1 to 5, **characterised in that** the Laval nozzle element (8) and the mixer element (9) are arranged concentrically within and/or at the nozzle head part (41).

7. Injector device (1) according to any one of claims 1 to 6, **characterised in that** the Laval nozzle element (8) is arranged to be centred by means of the mixer element (9) about the centre longitudinal axis (13) of the injector equipment (2, 3).

8. Injector device (1) according to any one of claims 1 to 7, **characterised in that** the injector device (1) comprises an injector mounting device (40) for mounting the injector equipment (2, 3) in the interior of the metallurgical unit or smelting vessel, wherein the injector mounting device (40) embraces the nozzle head part (41).

9. Injector device (1) according to any one of claims 1 to 8, **characterised in that** the nozzle head part (41) comprises a device (50) for arranging at least one ignition means (51), wherein the at least one ignition means (51) is so arranged at the nozzle head part (41) that the at least one ignition means (51) projects into an annular gap (43) formed by the Laval nozzle element (8) and the nozzle head part (41).

10. Injector device (1) according to claim 9, **characterised in that** the at least one ignition means (51) is arranged at the nozzle head part (41) perpendicularly to the centre longitudinal axis (13) of the injector equipment (2, 3).

11. Injector device (1) according to any one of claims 1 to 10, **characterised in that** the nozzle head part (41) comprises a plurality of oxygen channels (53) with oxygen outlet apertures (54) so as to be able to conduct air (36) or oxygen from outside to a hot gas jet (55) generated from the ignited combustible gas / air mixture (7).

12. Injector device (1) according to any one of claims 1 to 11, **characterised in that** the oxygen channels (53) are arranged within the nozzle head part (41) concentrically and angularly about the centre longitudinal axis (13) of the injector equipment (2, 3).

13. Injector device (1) according to claim 11 or 12, **characterised in that** the oxygen outlet apertures (54) are arranged within an outlet opening (56) of the nozzle head part (41).

14. Injector device (1) according to any one of claims 1 to 13, **characterised in that** the nozzle head part (41) comprises a quick-action clamping device (35) for mechanically positive clamping of the Laval nozzle element (8) and/or the mixer element (9).

15. Injector device (1) according to claim 14, **characterised in that** the mixer element (9) can be so mechanically positively clamped to the nozzle head part (41) that the Laval nozzle element (8) is detachably fixed to the nozzle head part (41) by means of the mixer element (9).

16. Injector device (1) according to claim 14 or 15, **characterised in that** the quick-action clamping device (45) of the nozzle head part (41) is so formed laterally at an end of the nozzle head part (41) remote from an exit opening (56) that three or more clamping means of the quick-action clamping device (45) are arranged concentrically about the centre longitudinal axis (13) of the injector equipment (2, 3).

17. Injector device (1) according to any one of claims 14 to 16, **characterised in that** the mixer element (9) comprises a lateral compressible annular element (23), particularly a Viton [Registered Trade Mark] O-ring (24).

18. Injector device (1) according to any one of claims 1 to 17, **characterised in that** an injector mounting device (40) for mounting the injector equipment (2, 3) comprises a joint unit (60) by means of which the nozzle head part (41) is pivotably arranged at the injector mounting device (40).

19. Injector device (1) according to claim 18, **characterised in that** that joint unit (60) comprises a joint socket part (61) and a joint head part (62), wherein the joint head part (62) embraces the nozzle head part (41).

20. Injector device (1) according to claim 18 or 19, **characterised in that** the joint head part (62) is exchangeably securable to the joint socket part (61) by means of a retaining ring element (63).

21. Injector device (1) according to any one of claims 1 to 20, **characterised in that** the nozzle head part (31) is arranged non-detachably at an injector mounting device (40) for mounting the injector equipment (2, 3).

22. Injector device (1) according to claim 21, **characterised in that** the nozzle head part (41) is connected with the injector mounting device by material couple.

23. Injector device (1) according to any one of claims 1 to 22, **characterised in that** the injector device (1) comprises a conductively operating cooling device in which the nozzle head part (41) comprises a metallic cooling contact surface (65) disposed in direct operative contact with a metallic cooling contact surface (66) of an injector mounting device (40) for mounting the injector equipment (2, 3).

24. Injector device (1) according to any one of claims 1 to 23, **characterised in that** the nozzle head part (41) at least in part forms wall regions (67) of a coolant channel (68) of a coolant device of the injector mounting device (40).

25. Injector device (1) according to any one of claims 1 to 24, **characterised in that** the injector device (1) comprises a media feed device (26) flange-mounted on the mixer element (9), wherein the media feed device (26) comprises at least one outer tube (12), centre tube (11) and inner tube (10), wherein the inner tube (10) is so arranged at least partly in the centre tube (11) that a combustible gas annular duct (33) is arranged between the inner tube (10) and the centre tube (11), wherein the centre tube (11) is so arranged at least partly in the outer tube (12) that an air or combustible gas annular duct (37) is arranged between the centre tube (11) and the outer tube (12) and wherein the outer tube (12), the centre tube (11) and the inner tube (10) are arranged concentrically about the centre longitudinal axis (13) of the injector equipment (2, 3).

26. Injector device (1) according to claim 25, **characterised in that** the combustible gas annular duct (33) and the air or combustible gas annular duct (37) are arranged concentrically about the centre longitudinal axis (13) of the injector equipment (2, 3).

27. Injector device (1) according to claim 25 or 26, **characterised in that** a carbon lance element (75) which extends through the mixer element (9) into the Laval nozzle element (8) is arranged within the inner tube (10).

28. Injector device (1) according to claim 27, **characterised in that** the carbon lance element (75) comprises a ceramic tube (77).

29. Electric arc furnace (4) **characterised by** at least one injector device (1) according to any one of the preceding claims.

## Revendications

1. Dispositif (1) faisant office d'injecteur pour le traitement pyrométallurgique de métaux, de métaux en fusion et/ou de laitiers dans un agrégat métallurgique ou un creuset comprenant un mécanisme d'injection (2, 3) pour générer un jet de gaz à grande vitesse (5) à partir d'un jet d'oxygène gazeux (6) et d'un jet mixte enflammé de gaz de combustion-air (7), dans lequel le mécanisme d'injection (2, 3) comprend un élément (8) sous la forme d'une buse de Laval disposé dans une tête de projection de jet (41) pour générer le jet d'oxygène gazeux (6), et dans lequel le mélange de gaz de combustion-air (7) peut être mélangé au moyen d'un élément (9) faisant office de mélangeur pour le mélange du gaz de combustion (32) et de l'air (36), **caractérisé en ce que** l'élément (8) sous la forme d'une buse de Laval et l'élément (9) faisant office de mélangeur sont disposés au sein de la tête de projection de jet (41) et/ou contre cette dernière, de manière conjointe le long de l'axe longitudinal médian (13) du mécanisme d'injection (2, 3) l'un derrière l'autre de manière à pouvoir être détachés l'un de l'autre, de telle sorte que l'on obtient, entre la tête de projection de jet (41) et l'élément (8) sous la forme d'une buse de Laval, un espace annulaire (43) dans lequel débouchent un canal (34) pour le gaz de combustion et un canal (38) pour l'air, de l'élément (9) faisant office de mélangeur.

2. Dispositif (1) faisant office d'injecteur selon la revendication 1, **caractérisé en ce que** l'élément (8) sous la forme d'une buse de Laval et l'élément (9) faisant office de mélangeur représentent des éléments tournés réalisés par enlèvement de matière, qui sont reliés directement l'un à l'autre par friction et/ou par complémentarité de forme.

3. Dispositif (1) faisant office d'injecteur selon la revendication 2, **caractérisé en ce que** la dimension de l'espace annulaire (43) peut être réglée en fonction d'une distance axiale entre l'élément (8) sous la forme d'une buse de Laval et l'élément (9) faisant office de mélangeur.

4. Dispositif (1) faisant office d'injecteur selon la revendication 3, **caractérisé en ce que** la distance axiale entre l'élément (8) sous la forme d'une buse de Laval et l'élément (9) faisant office de mélangeur peut être réglée au moyen de différentes rondelles annulaires d'espacement (44).

5. Dispositif (1) faisant office d'injecteur selon l'une quelconque des revendications 1 à 4, **caractérisé en ce que** l'élément (8) sous la forme d'une buse de Laval présente un filet de vis externe (14) au moyen duquel l'élément (8) sous la forme d'une buse de Laval peut être vissé dans un filet de vis interne (15) de l'élément (9) faisant office de mélangeur.

6. Dispositif (1) faisant office d'injecteur selon l'une quelconque des revendications 1 à 5, **caractérisé en ce que** l'élément (8) sous la forme d'une buse de Laval et l'élément (9) faisant office de mélangeur sont disposés en position concentrique à l'intérieur de la tête de projection de jet (41) et/ou contre cette dernière.

7. Dispositif (1) faisant office d'injecteur selon l'une quelconque des revendications 1 à 6, **caractérisé en ce que** l'élément (8) sous la forme d'une buse de Laval est disposé en étant centré autour de l'axe longitudinal médian (13) du mécanisme d'injection (2, 3) au moyen de l'élément (9) faisant office de mélangeur.

8. Dispositif (1) faisant office d'injecteur selon l'une quelconque des revendications 1 à 7, **caractérisé en ce que** le dispositif (1) faisant office d'injecteur comprend un mécanisme de retenue d'injecteur (40) pour retenir le mécanisme d'injection (2, 3) à l'intérieur de l'agrégat métallurgique ou du creuset, le mécanisme de retenue d'injecteur (40) comprenant la tête de projection de jet (41).

9. Dispositif (1) faisant office d'injecteur selon l'une quelconque des revendications 1 à 8, **caractérisé en ce que** la tête de projection de jet (41) comprend un mécanisme (50) pour l'agencement d'au moins un moyen d'allumage (51), ledit au moins un moyen d'allumage (51) étant disposé contre la tête de projection de jet (41) d'une manière telle que ledit au moins un moyen d'allumage (51) fait saillie jusque dans un espace annulaire (43) formé par l'élément (8) sous la forme d'une buse de Laval et la tête de projection de jet (41).

10. Dispositif (1) faisant office d'injecteur selon la revendication 9, **caractérisé en ce que** ledit au moins un moyen d'allumage (51) est disposé perpendiculairement à l'axe longitudinal médian (13) du mécanisme d'injection (2, 3) contre la tête de projection de jet (41).

11. Dispositif (1) faisant office d'injecteur selon l'une quelconque des revendications 1 à 10, **caractérisé en ce que** la tête de projection de jet (41) présente une multitude de canaux (53) pour l'oxygène comportant des trous d'évacuation (54) pour l'oxygène afin de pouvoir guider de l'air (36), respectivement de l'oxygène à partir de l'extérieur sur un jet de gaz chaud (55) généré par le mélange enflammé de gaz de combustion-air (7).

12. Dispositif (1) faisant office d'injecteur selon la revendication 11, **caractérisé en ce que** les canaux (53) pour l'oxygène sont disposés en position concentrique à l'intérieur de la tête de projection de jet et en formant un angle autour de l'axe longitudinal médian (13) du mécanisme d'injection (2, 3).

13. Dispositif (1) faisant office d'injecteur selon la revendication 11 ou 12, **caractérisé en ce que** les trous d'évacuation (54) pour l'oxygène sont disposés à l'intérieur d'une ouverture de sortie (56) de la tête de projection de jet (41).

14. Dispositif (1) faisant office d'injecteur selon l'une quelconque des revendications 1 à 13, **caractérisé en ce que** la tête de projection de jet (41) comprend un mécanisme de serrage rapide (45) pour le serrage par complémentarité de forme de l'élément (8) sous la forme d'une buse de Laval et/ou de l'élément (9) faisant office de mélangeur.

15. Dispositif (1) faisant office d'injecteur selon la revendication 14, **caractérisé en ce que** l'élément (9) faisant office de mélangeur peut être serré par complémentarité de forme contre la tête de projection de jet (41) d'une manière telle que l'élément (8) sous la forme d'une buse de Laval est fixé de manière amovible au moyen de l'élément (9) faisant office de mélangeur contre la tête de projection de jet (41).

16. Dispositif (1) faisant office d'injecteur selon la revendication 14 ou 15, **caractérisé en ce que** le mécanisme de serrage rapide (45) de la tête de projection de jet (41) est conçu latéralement à une extrémité de la tête de projection de jet (41), qui se détourne d'une ouverture de sortie (56), d'une manière telle que trois moyens de serrage ou plus du mécanisme de serrage rapide (45) sont disposés en position concentrique autour de l'axe longitudinal médian (13) du mécanisme d'injection (2, 3).

17. Dispositif (1) faisant office d'injecteur selon l'une quelconque des revendications 14 à 16, **caractérisé en ce que** l'élément (9) faisant office de mélangeur comprend, en position latérale, un élément annulaire (23) apte à être comprimé, en particulier un joint torique Viton® (24).

18. Dispositif (1) faisant office d'injecteur selon l'une quelconque des revendications 1 à 17, **caractérisé en ce qu'**un mécanisme de retenue d'injecteur (40) pour retenir le mécanisme d'injection (2, 3) comprend une unité d'articulation (60) au moyen de laquelle la tête de projection de jet (41) est disposée en articulation contre le mécanisme de retenue d'injecteur (40).

19. Dispositif (1) faisant office d'injecteur selon la revendication 16, **caractérisé en ce que** l'unité d'articulation (60) présente un élément (61) sous la forme d'une cavité articulaire et une tête articulée (62), la tête articulée (62) comprenant la tête de projection de jet (41).

20. Dispositif (1) faisant office d'injecteur selon la revendication 18 ou 19, **caractérisé en ce que** la tête articulée (62) peut être fixée au moyen d'un élément (63) sous la forme d'un anneau de retenue, de manière apte à être échangée, contre la cavité articulaire (61).

21. Dispositif (1) faisant office d'injecteur selon l'une quelconque des revendications 1 à 20, **caractérisé en ce que** la tête de projection de jet (41) est disposée à demeure contre un mécanisme de retenue d'injecteur (40) pour la retenue du mécanisme d'injection (2, 3).

22. Dispositif (1) faisant office d'injecteur selon la revendication 21, **caractérisé en ce que** la tête de projection de jet (41) est reliée par complémentarité de matière au mécanisme de retenue d'injecteur (40).

23. Dispositif (1) faisant office d'injecteur selon l'une quelconque des revendications 1 à 22, **caractérisé en ce que** le dispositif (1) faisant office d'injecteur comprend un mécanisme de refroidissement travaillant par conduction, la tête de production de jet (41) comprenant une surface de contact de refroidissement métallique (65) qui entre directement en contact fonctionnel avec une surface de contact de refroidissement métallique (66) d'un mécanisme de retenue d'injecteur (40) pour la retenue du mécanisme d'injection (2, 3).

24. Dispositif (1) faisant office d'injecteur selon l'une quelconque des revendications 1 à 23, **caractérisé en ce que** la tête de production de jet (41) est réalisée au moins en partie sous la forme de zones de paroi (67) d'un canal (68) destiné à un agent de refroidissement, d'un mécanisme pour le moyen de refroidissement, du mécanisme de retenue d'injecteur (40).

25. Dispositif (1) faisant office d'injecteur selon l'une quelconque des revendications 1 à 24, **caractérisé en ce que** le dispositif (1) faisant office d'injecteur présente un mécanisme d'alimentation de milieux (26) qui est raccordé par bride à l'élément (9) faisant office de mélangeur, le mécanisme d'alimentation de milieux (26) comprenant au moins un tube externe (12), un tube médian (11) et un tube interne (10), le tube interne (10) étant disposé au moins en partie dans le tube médian (11) d'une manière telle que l'on obtient, entre le tube interne (10) et le tube médian (11), un conduit annulaire (33) pour le gaz de combustion, le tube médian (11) étant disposé au moins en partie dans le tube externe (12) d'une manière telle que l'on obtient, entre le tube médian (11) et le tube externe (12) un conduit annulaire (37) pour l'air ou pour le gaz combustion, et le tube externe (12), le tube médian (11) et le tube interne (10) étant disposés en position concentrique autour de l'axe longitudinal médian (13) du mécanisme d'injection (2, 3).

26. Dispositif (1) faisant office d'injecteur selon la revendication 25, **caractérisé en ce que** le conduit annulaire (33) pour le gaz de combustion et le conduit annulaire (37) pour l'air ou pour le gaz de combustion sont disposés en position concentrique autour de l'axe longitudinal médian (13) du mécanisme d'injection (2, 3).

27. Dispositif (1) faisant office d'injecteur selon la revendication 25 ou 26, **caractérisé en ce que**, au sein du tube interne (10), est disposé un élément faisant office de lance de carbone (75), qui traverse l'élément (9) faisant office de mélangeur pour aboutir dans l'élément (8) sous la forme d'un tube de Laval.

28. Dispositif (1) faisant office d'injecteur selon la revendication 27, **caractérisé en ce que** l'élément faisant office de lance de carbone (75) comprend un tube en céramique (77).

29. Four à arc électrique (4) **caractérisé par** au moins un dispositif (1) faisant office d'injecteur selon l'une quelconque des revendications précédentes.
